# EUROPEAN PATENT APPLICATION

(11) **EP 4 508 964 A1**
(43) Date of publication of application: **19.02.2025**
(21) Application number: 23192261.8
(22) Date of filing: 18.08.2023
(51) Int. Cl.: A01C 11/02, A01C 5/04

(54) **A MOVABLE ASSEMBLY FOR AUTOMATICALLY PLANTING PLANTS ALONG A PLANTING LINE**

(30) Priority: 17.08.2023 PT 2023118869
(71) Applicant: Fravizel - Equipamentos Metalomecânicos, S.A., 2025-999 Alcanede (PT)
(72) Inventor: VICENTE FRAZÃO, ELISEU MANUEL, ALCANEDE (PT)
(74) Representative: do Nascimento Gomes, Rui

(57) **Abstract**

The present disclosure refers to the automatic planting of living plants, by means of moving structures (10), such as carts - movable by resort of an associatable vehicle - or vehicles, which provide the automatic planting of living plants provided in such moving structures or assemblies. It discloses an automatic planting movable assembly (10) which includes a planting module (20) which is movable between a planting position in which the planting module is inserted into the soil to therein plant a living plant. In this position, the planting module is releasable to freely move along the direction of movement while the base moving means (12) are maintained in movement together with the body (11), and thereby the whole movable assembly along the direction of movement.

## Description

### AREA OF THE DISCLOSURE

The present disclosure refers to the automatic planting of living plants, by means of moving structures, such as carts - movable by resort of an associatable vehicle - or vehicles, which provide the automatic planting of living plants provided in such moving structures or assemblies.

### PRIOR ART

One of the most common solutions to provide a certain automation in the planting of living plants is track planters, which include an excavator, and which move at different velocities. This sort of equipment stops to dig a hole in which, then, a living plant is provided.

Other more automated solutions exist, namely including the automatic loading of living plants. These solutions again include the digging of a hole and a subsequent planting of the living plant into such hole, in an automated manner. This sort of equipment may consist of an add-on or attachment to be provided in a vehicle. Again, the vehicle stops to dig the hole and plant the living plant, then resuming movement until the next planting.

These solutions known in the art allow, at best, 60 plants per hour, typically resulting in 300-400 plants a day, considering 6-7 hours of useful time. Plants may consist of trees, such as saplings.

The solution of the present disclosure innovatively improves prior art, allowing to plant at least the same number of plants per hour which prior art solutions plant in one day.

### SUMMARY OF THE DISCLOSURE

The present disclosure comprises, in a first aspect, a movable assembly for automatically planting a living plant, the movable assembly comprising i) a body, ii) base moving means coupled to the body and movable along a direction of movement substantially parallel to soil provided below the movable assembly and iii) a planting module, the planting module being adapted to contain a living plant and being coupled to the body,
wherein the planting module being movable between a planting position in which the planting module is inserted into the soil to therein plant a living plant and a recharge position in which the planting module is provided away and thereby above the soil, and
when in the planting position, the planting module is releasable to freely move along the direction of movement while the base moving means are maintained in movement together with the body, and thereby the whole movable assembly along the direction of movement,
and, the movable assembly further comprises secondary moving means coupled to the body and which actively move the planting module when not in the planting position, moving the planting module in relation to the body and the base moving means, along the direction of movement.

The movable assembly of the present disclosure is, thus, particularly suitable for automatically planting living plants in the field, namely to plant a plurality of trees along a planting line, allowing to plant a forest at a rate much higher than those of prior art solutions, by maintaining a constant velocity.

The planting module may be movable in relation to the body between two end positions along the direction of movement, wherein the body comprises limiting elements which limit the movement between such two end positions.

The movable assembly may comprise vertical moving means configured to move the planting module being between the planting position and the recharge position, the vertical moving means comprising first and second vertical moving means, the first vertical moving means imposing a first velocity to the second vertical moving means and the second vertical moving means imposing a total velocity to the planting module which consists of the sum of the first velocity with a second velocity.

The first vertical moving means may comprise a first actuator and the second vertical moving means comprise a second actuator.

The body may comprise an open section provided in it, the planting module being provided within the open section such that a living plant is providable directly from above the planting module.

The movable assembly may further comprise living plant feeding means, the living plant feeding means being arranged such that automatically and continuously provide living plants into the planting module, for subsequent planting.

The base moving means may comprise at least two wheels, the movable assembly thereby being at least a two-wheeled movable assembly,
or the base moving means comprising at least two tracks, the movable assembly thereby being at least a two-tracked movable assembly.

The movable assembly may further comprise at least one inclinometer and the wheels being configured such that height of each wheel being adjustable based on one or more measurements of the inclinometer.

The planting module may comprise at least one main hollow tube and a lid provided in a bottom opening of the main hollow tube, the opening and closing of such lid being controllable. The main hollow tube may consist of a parallelepipedal hollow tube.

The main hollow tube may comprise one or more side openings, one further hollow tube being provided in each opening, wherein water, gel, or fertilizer provided in the further hollow tube reaches the bottom opening of the main hollow tube.

A lower section of the main hollow tube, which includes the bottom opening, may form a wedge shape, wherein the bottom opening is transversally provided in relation to a soil plane.

The movable assembly may be configured such that the lid is opened when the planting module is in the planting position.

The movable assembly may consist of a non-motorized trailer associatable with a motorized vehicle.

The movable assembly may consist of vehicle, in which case the base moving means are configured to move the vehicle at a selectable velocity, wherein such velocity may be constant.

The base moving means may also be described as being configured to be movable and thereby move the body along a direction of movement at a constant velocity.

In a second aspect, the present disclosure comprises a method for operating a movable assembly to automatically plant a living plant.

The method comprises the steps of:
moving the movable assembly along a direction of movement substantially parallel to soil provided below the movable assembly, together with a planting module,
providing a plant in a planting module,
lowering the planting module until providing it within the soil and allowing the planting module to move freely along the direction of movement,
raising the planting module at least until removing it from the soil and again making it solidary with the movable assembly along the direction of movement, and
moving the planting module in relation to the body and the base moving means along the direction of movement.

The method may be repeated, allowing to plant a plurality of living plants along a planting line, planting a forest when planting a plurality of living plants along a plurality of planting lines. When moving from a planting line to another, the direction of movement may be changed such that the movable assembly is aligned with the new planting line. The new planting line may be substantially parallel to the prior planting line.

The method may be implemented by the movable assembly of the present disclosure.

### DESCRIPTION OF THE FIGURES

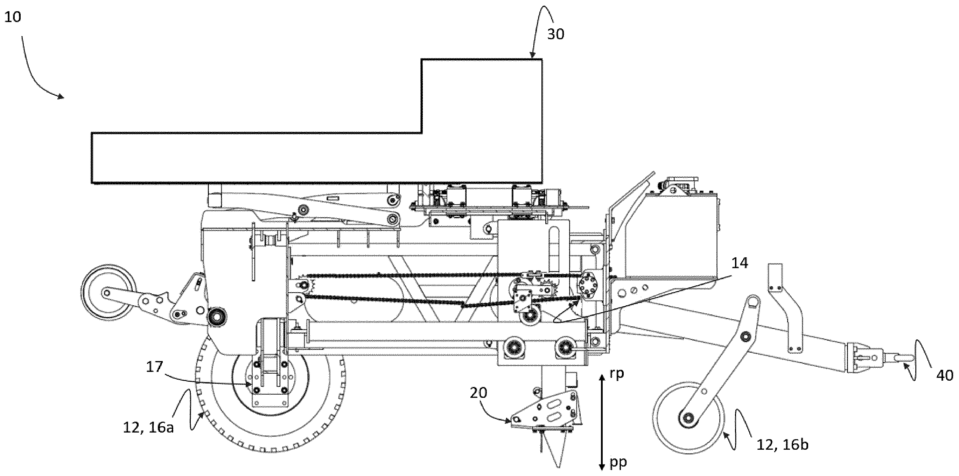

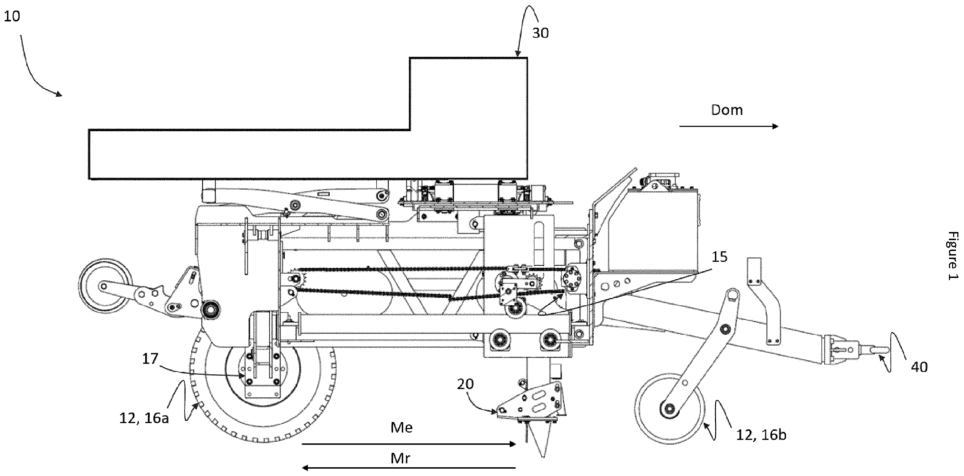

Figure 1- a cross-section view of a movable assembly (10) according to the present disclosure, comprising several main modules: the body (11), the base moving means (12), the secondary moving means (14) and the living plant feeding means (30). Further elements are shown, such as means for coupling the movable assembly (10) to a vehicle or a fertilizer tank (40). The planting module (20) is partially shown.
   The base moving means (12) comprise two rear wheels (16a), the height of each of such rear wheels being independently adjustable through dedicated actuators [one rear wheel (16a) and respective actuator (17) are represented]. The moving means further comprise a front wheel (16b), which is retracted. The secondary moving means (14) comprise a drive chain in which the planting module may be engaged.
   The living plant feeding means (30) (represented as a sketch module) may comprise a platform in which living plants provided in cups are arranged. Such cups are automatically moved to a buffer zone, from which they are transferred into the planting module. Living plants are transferred one by one from the buffer zone to the planting module. A constant velocity is imposed to the trailer, which moves without stopping while the planting module is put into the planting position (pp). The planting module (20) may then be again moved to the recharge position (rp), in a vertical movement as regards the soil. Due to the free movement of the planting module (20) while in such position, the constant velocity may be maintained, thus increasing the planting rate of the movable assembly (10).

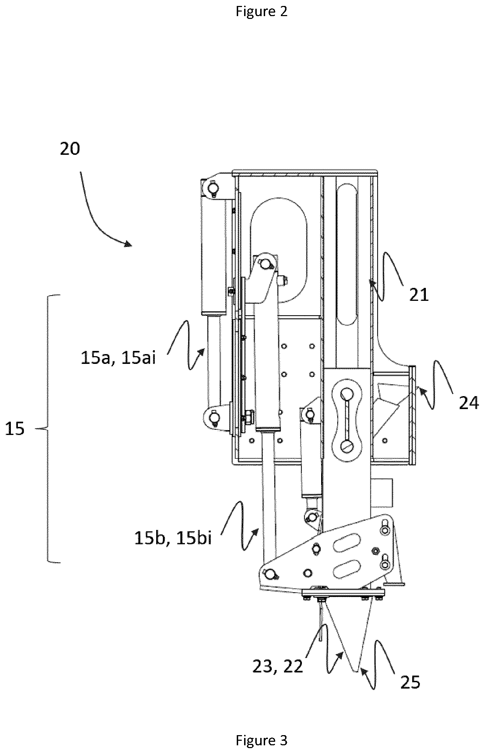

Figure 2-the same view and embodiment of Figure 1, in which the direction of movement (Dom) is represented. Furthermore, the movement of the planting module (20) in relation to the body (11) of the movable assembly (10) - and parts solidary with it - when in the planting position (pp), a released movement (Mr), is shown. In such released movement (Mr), the planting module (20) is disengaged from the drive chain (14), and moves freely along the direction of movement (Dom). When not in the planting position (pp), including when in the recharge position (rp), the planting module (20) is again engaged in the drive chain (14) as secondary moving means, and the movement imposed by the drive chain (14) to the planting module (20), an engaged movement (Me) which consists of a movement of the planting module (20) relatively to the body (11) of the movable assembly (10) - and parts solidary with it -, is represented.
Figure 3 - side view representation of a planting module (20) according to the present disclosure. The planting module (20) comprises a parallelepipedal hollow tube (21) in which a living plant may be provided prior to planting. A lid (22) is provided at the bottom of the hollow tube (21). When the lid (22) is open, the living plant provided in the hollow tube is dropped through a bottom opening (23) provided in the hollow tube (21), into the hole dug by the planting module (20). The lower section of the hollow tube (21), which includes the bottom opening (23), forms a wedge shape (25). As can be seen, the bottom opening (23) is transversally provided in relation to a soil plane (horizontal). The wedge shape (25) of the tube (21) digs a hole in the soil when provided in the planting position (pp). By opening the lid (22), the living plant falls into the dug hole. A further hollow tube, which is provided laterally and forming the side opening (24), is represented. Through such opening, water, gel or fertilizer (each from a dedicated tank or the fertilizer tank), may be provided, to join such elements to the living plant when planted and further automate the process.
   Moreover, two actuators (15ai, 15bi) are represented, being part of the vertical moving means (15), specifically and respectively of the first vertical moving means (15a) and the second vertical moving means (15b), increasing the velocity of the vertical movement of the planting module (20) - the hollow tube (21) -, from the recharge position (rp) to the planting position (pp), and from the planting position (pp) to the recharge position (rp).

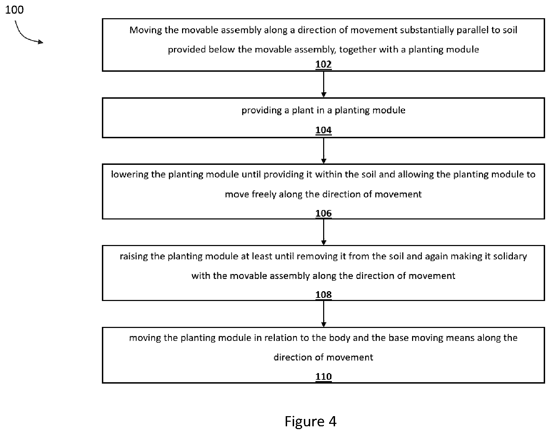

Figure 4 - a flowchart representation of a method (100) according to the present disclosure, including the steps of moving the movable assembly along a direction of movement substantially parallel to soil provided below the movable assembly, together with a planting module (102), providing a plant in a planting module (104), lowering the planting module until providing it within the soil and allowing the planting module to move freely along the direction of movement (106), raising the planting module at least until removing it from the soil and again making it solidary with the movable assembly along the direction of movement (108), and moving the planting module in relation to the body and the base moving means along the direction of movement (110).

### DETAILED DESCRIPTION

The present disclosure comprises a movable assembly.

The movable assembly is suitable for automatically planting a living plant, the movable assembly comprising i) a body, ii) base moving means coupled to the body and movable along a direction of movement substantially parallel to soil provided below the movable assembly and iii) a planting module, the planting module being adapted to contain a living plant and being coupled to the body.

The planting module is movable between a planting position in which the planting module is inserted into the soil to therein plant a living plant and a recharge position in which the planting module is provided away and thereby above the soil.

When in the planting position, the planting module is releasable to freely move along the direction of movement while the base moving means are maintained in movement together with the body, and thereby the whole movable assembly along the direction of movement. It may be referred that the planting module and the movable assembly are arranged such that the planting module is releasable, to freely move along the direction of movement while the base moving means are maintained in movement together with the body, and thereby the whole movable assembly along the direction of movement.

The base moving means may comprise two wheels. For instance, the movable assembly may consist of a non-motorized trailer or cart, wherein such trailer is directly or indirectly couplable or coupled to a vehicle which is motorized and provides the movement of the movable assembly.

The base moving means may further comprise a third wheel, provided such that triangle is defined between the three wheels, thereby enhancing stability. The third wheel may be such that it is able to be lowered to rest on the soil, as the other two wheels, and again raised to be removed from such position and not participate in the movement of the movable assembly.

The movable assembly further comprises secondary moving means coupled to the body and which actively move the planting module when not in the planting position, moving the planting module in relation to the body and the base moving means, along the direction of movement.

Before being placed in the planting position, the planting module is provided in a first position along the direction of movement of the movable assembly. Then, the planting module is moved into the planting position, such consisting substantially of a vertical movement, substantially perpendicular to the soil provided below the movable assembly.

The planting module is thus also released and is able to freely move along the direction of movement. Since the planting module is in the planting position, it is provided within the soil. The planting module is, thus, solidary with the soil, and moves in relation to the body, the base moving means and the remaining movable assembly with a velocity which is the opposite of the velocity with which the base moving means move with the movable assembly. The overall velocity of the planting module is, thus, null. The base moving means, as subsequently referred, may actively move the body or be moved by a separate vehicle.

This solution allows that the movable assembly does not stop as long as the planting module is fed with new living plants, manually or automatically.

Thus, it may be considered that, when the planting module is placed in the planting position, it is in a position *X* in a line formed by the direction of movement, while an adjacent point of the body is in a position *X* as well. Such line may also be defined as parallel to the body, which extends along a direction forming the structure of the movable assembly, as shown in the figures.

Some moments after the planting module is kept in the planting position, its position *X* will remain the same. Still, the adjacent point of the body is in a position which is *X + v.t, t* being the time elapsed and *v* the velocity which the base moving means impose to the body.

After the planting module is removed from the planting position, which may be considered as after the moment in which the planting module is no longer provided within the soil, or completely out of the soil, it is made to again be solidary with the body. Furthermore, the secondary moving means are able to move the planting module between back to a position X' along an axis formed by the direction of movement, the position of the said adjacent point being X' as well.

This is enabled by the movement imposed by the secondary moving means, which make the planting module move in relation to the body.

The planting module thereby moves along a circuit in relation to a fixed point (e.g., the adjacent point, adjacent to an initial position) of the body of the movable assembly, from an initial position of the circuit when it is put in the planting position and freely moves, to a final position when it is removed from the planting position, back to the initial position by means of the secondary moving means and the relative movement in relation to the fixed point.

When being moved by the secondary moving means, the planting module moves with a total velocity *Vt = V + v,* where V is the velocity which the base moving means together with the whole assembly and v is the velocity which the secondary moving means impose to the planting module, in relation to the remaining assembly (e.g., the body).

Thus, the movable assembly is able to maintain a steady velocity, not stopping, while continuously planting living plants. The planting module is maintained in the soil, in the planting position, for a period of time which enables to plant the living plant contained therein.

The movable assembly may consist of a cart. In such case, the movable assembly is actively moved by means of a vehicle. The cart is thereby couplable to the vehicle.

The movable assembly may also consist of a vehicle itself. In such case, the vehicle may comprise several further components known in the art, still providing the autonomous ability of moving and automatically planting living plants. In such case, the base moving means are autonomous, thereby being configured to move the vehicle at a selectable velocity. Such velocity may be constant. The vehicle may comprise a motor which actuates the base moving means.

The secondary moving means may consist of one or more drive chains in which the planting module is engaged. The movement of the chain or chains causes the planting module to move along the said circuit, coming back to a position said initial, when not in the planting position.

When placed into the planting position, the planting module is also released to move freely along the direction of movement by releasing it from the drive chain, its drive thereby not being imposed to the planting module.

The release to move freely and the placement into the planting position may be simultaneous.

The movement between the planting position and the recharge position may be considered as vertical, i.e., the planting module moved down, being lowered to be provided within the soil and plant the living plant.

Then, to be again placed into the recharge position, in which a living plant may be provided within the planting module, the planting module is raised, moving up.

The living plant may consist of a tree, in particular a small tree, a sapling.

As will be clear to one skilled in the art, the present disclosure should not be limited to the embodiments described herein, and a number of changes are possible which remain within the terms of the present disclosure.

Of course, the preferred embodiments shown above are combinable, in the different possible forms, being herein avoided the repetition all such combinations.

## Claims

1. A movable assembly for automatically planting a living plant, the movable assembly comprising i) a body, ii) base moving means coupled to the body and movable along a direction of movement substantially parallel to soil provided below the movable assembly and iii) a planting module, the planting module being adapted to contain a living plant and being coupled to the body,
the planting module being movable between a planting position in which the planting module is inserted into the soil to therein plant a living plant and a recharge position in which the planting module is provided away and thereby above the soil, and
when in the planting position, the planting module is releasable to freely move along the direction of movement while the base moving means are maintained in movement together with the body, and thereby the whole movable assembly along the direction of movement,
and, the movable assembly further comprises secondary moving means coupled to the body and which actively move the planting module when not in the planting position, moving the planting module in relation to the body and the base moving means, along the direction of movement.

2. A movable assembly according to the previous claim wherein the planting module is movable in relation to the body between two end positions along the direction of movement, wherein the body comprises limiting elements which limit the movement between such two end positions.

3. A movable assembly according to any of the preceding claims wherein it comprises vertical moving means configured to move the planting module being between the planting position and the recharge position, the vertical moving means comprising first and second vertical moving means, the first vertical moving means imposing a first velocity to the second vertical moving means and the second vertical moving means imposing a total velocity to the planting module which consists of the sum of the first velocity with a second velocity.

4. A movable assembly according to the previous claim wherein the first vertical moving means comprise a first actuator and the second vertical moving means comprise a second actuator.

5. A movable assembly according to any of the preceding claims wherein the body comprises an open section provided in it, the planting module is provided within the open section such that a living plant is providable directly from above the planting module.

6. A movable assembly according to any of the preceding claims wherein it further comprises living plant feeding means, the living plant feeding means being arranged such that automatically and continuously provide living plants into the planting module, for subsequent planting.

7. A movable assembly according to any of the preceding claims wherein the base moving means comprise at least two wheels, the movable assembly thereby being at least a two-wheeled movable assembly,
or the base moving means comprising at least two tracks, the movable assembly thereby being at least a two-tracked movable assembly.

8. A movable assembly according to the previous claim wherein it further comprises at least one inclinometer and the wheels being configured such that height of each wheel being adjustable based on one or more measurements of the inclinometer.

9. A movable assembly according to any of the preceding claims wherein the planting module comprises at least one main hollow tube, optionally a parallelepipedal hollow tube, and a lid provided in a bottom opening of the main hollow tube, the opening and closing of such lid being controllable.

10. A movable assembly according to the previous claim wherein the main hollow tube comprises one or more side openings, one further hollow tube being provided in each opening, wherein water, gel, or fertilizer provided in the further hollow tube reaches the bottom opening of the main hollow tube.

11. A movable assembly according to the previous claim wherein a lower section of the main hollow tube, which includes the bottom opening, forms a wedge shape, wherein the bottom opening is transversally provided in relation to a soil plane.

12. A movable assembly according to any of the claims 9-11 wherein it is configured such that the lid is opened when the planting module is in the planting position.

13. A movable assembly according to any of the preceding claims wherein it consists of a non-motorized trailer associatable with a motorized vehicle or of a vehicle, in which case the base moving means are configured to move the vehicle at a selectable velocity, wherein such velocity may be constant.

14. A method for operating a movable assembly to automatically plant a living plant, the method comprising the steps of:
moving the movable assembly along a direction of movement substantially parallel to soil provided below the movable assembly, together with a planting module,
providing a plant in a planting module,
lowering the planting module until providing it within the soil and allowing the planting module to move freely along the direction of movement,
raising the planting module at least until removing it from the soil and again making it solidary with the movable assembly along the direction of movement, and
moving the planting module in relation to the body and the base moving means along the direction of movement.

15. A method according to the previous claim wherein the method is implemented by the movable assembly of any of the claims 1-13.
